# Europäisches Patentamt

# European Patent Office

# Office européen des brevets

(11) Veröffentlichungsnummer: **0 079 094**
**B1**

(12) **EUROPÄISCHE PATENTSCHRIFT**

(45) Veröffentlichungstag der Patentschrift:
02.09.87

(51) Int. Cl.⁴: **H 02 K 21/02**

(21) Anmeldenummer: **82201309.0**

(22) Anmeldetag: **21.10.82**

(54) Verfahren zur Dimensionierung eines Antriebes mit einem selbstanlaufenden Einphasensynchronmotor.

(30) Priorität: **22.10.81 DE 3141833**

(43) Veröffentlichungstag der Anmeldung:
**18.05.83 Patentblatt 83/20**

(45) Bekanntmachung des Hinweises auf die Patenterteilung:
**02.09.87 Patentblatt 87/36**

(84) Benannte Vertragsstaaten:
**AT DE FR GB**

(56) Entgegenhaltungen:
**DE-A-2 329 499**
**DE-U-1 793 381**

(73) Patentinhaber: **Philips Patentverwaltung GmbH, Billstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten: **FR GB AT**

(72) Erfinder: **Bertram, Leo, Am Sender 10, D-5190 Stolberg (DE)**
Erfinder: **Diefenbach, Gerhard, Schulstrasse 19, D-5100 Aachen (DE)**
Erfinder: **Schemmann, Hugo, Dr., Zwartebergweg 6, Schaesberg (NL)**

(74) Vertreter: **Kupfermann, Fritz- Joachim, Philips Patentverwaltung GmbH Billstrasse 80 Postfach 10 51 49, D-2000 Hamburg 28 (DE)**

LIBER, STOCKHOLM 1987

## Beschreibung

Die Erfindung bezieht sich auf ein Verfahren zur Dimensionierung eines Antriebes mit einem selbstanlaufenden Einphasensynchronmotor ohne Hilfswicklung mit einem dauermagnetischen, diametral magnetisierten Läufer und mit einem Ständer, der mit Erregerwicklung versehen ist und einen für diesen Motor durch seine Abmessungen vorgegebenen maximalen Kupferwickelraum aufweist, mit einer zugehörigen, bei viskoser Last theoretischen, natürlichen Grenzleistung ($P_{ab, n}$), die zu erzielen ist, wenn bei völliger Ausnutzung der Wickelfläche unter Variation der Wicklungsdaten unter Beachtung der thermischen Vorschriften der Motor nicht zu heiß wird, wobei der Motor bei nicht viskoser oder teilweise viskoser Last eine dynamische Grenzleistung oder Kippleistung hat, die niedriger als die natürliche Grenzleistung ist.

Unter thermisch zulässiger Belastung ist diejenige maximale Motorbelastung zu verstehen, die den geltenden Temperaturvorschriften entspricht. Diese Temperaturvorschriften werden von den vom Staat beauftragten Überwachungsstellen für jedes Gerät vorgegeben, entsprechend seiner Betriebsweise. Der Motor des bestimmten Gerätetyps darf sich entsprechend dieser Temperaturvorschrift im Dauer-, Intervall-, Kurzzeit- u. a. Betrieb nicht über einen bestimmten Wert hinaus erwärmen.

Selbstanlaufende Synchronmotoren sind beispielsweise aus der DE-AS 25 24 519 bekannt. In diese Motoren, die im allgemeinen selbstkühlend ohne Zuhilfenahme eines Lüfters durch Luftbewegung und Strahlung gekühlt werden, darf bei einer bestimmten Stator-Rotor-Spulengeometrie nur eine bestimmte Verlustleistung gesteckt werden, um eine vorgegebene Temperaturerhöhung nicht zu überschreiten. Durch die maximal zulässige Verlustleistung wird auch die abgebbare Leistung begrenzt.

Die Temperaturvorschriften beziehen sich im allgemeinen auf einen bestimmten Belastungsfall, bei vielen Anwendungen auf den Leerlaufbetrieb bei Überspannung. Bei der Auslegung eines Motors auf eine bestimmte erforderliche Kippleistung ist die Kenntnis und Berücksichtigung der jeweils geltenden Vorschriften über die Erwärmungsverhältnisse eine entscheidende Voraussetzung für die Bestimmung der maximal zulässigen Verlustleistung und die Optimierung des Motors.

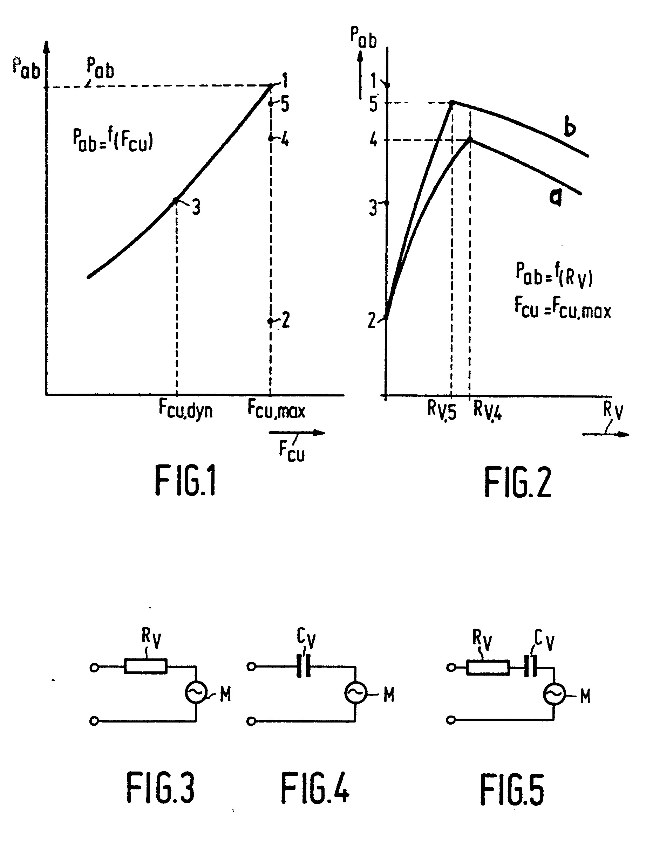

Geht man von einer vorgegebenen Stator-Rotor-Konfiguration und einer bestimmten Spulenanordnung aus, die angebbar ist durch einen bestimmten magnetischen Rotorfluß pro Windung $\Phi^{(1)}$magn, einen bestimmten magnetischen Leitwert der Spulen $\Lambda$ und eine maximale Spulenwickelfläche $F_{cu,max}$ so wird die theoretisch dem Motor bei einer bestimmten vorgegebenen Verlustleistung entnehmbar

abgegebene Leistung $P_k$ umso größer, je mehr die zur Verfügung stehende Wickelfläche ausgenutzt wird. In Fig. 1 ist die Abhängigkeit der Kippleistung $P_k$ des Motors bei gegebenem Leitwert $\Lambda$ und festgehaltener Verlustleistung $P_v$ von der ausgenutzten Wickelfläche $F_{cu}$ an einem Beispiel dargestellt.

Die ausgenutzte Wickelfläche $F_{cu}$ hängt wie folgt von der Windungszahl der Spule w, dem Drahtdurchmesser d und dem Kupferfüllfaktor $f_{cu}$ ab:
$$F_{cu} = \tfrac{w \cdot d^2 \pi}{4 \cdot f_{cu}}$$

Sie kann höchstens die maximal zur Verfügung stehende Wickelfläche $F_{cu,max}$ bei vollgewickelten Spulen erreichen.
$$F_{cu} \leq F_{cu,max}$$
Aus Fig. 1 entnimmt der Motorbauer die Anweisung, dafür Sorge zu tragen, daß die Wickelfläche voll ausgenutzt wird, und die Spulen daher voll aufzuwickeln.

Die in diesem Fall erreichbare Kippleistung wird im folgenden als natürliche Grenzleistung $P_{ab,n}$ des Motors bezeichnet. Es ist die maximale Leistung, die bei Variation der Spulenwicklung unter Beachtung der thermischen Vorschriften theoretisch aus dem Motor herauszuholen ist, ohne daß dieser zu heiß würde.

Eine weitere Schlußfolgerung aus Fig. 1 besteht darin, eine große Leistung dadurch zu erzielen, daß man die Wickelfläche möglichst groß macht.

Treibt ein derartig konzipierter Motor z. B. eine Flüssigkeitspumpe in einem viskosen Medium an, dann ist die für die vorliegende Verlustleistung geltende natürliche Grenzleistung (Punkt 1, Fig. 1) auch in der Praxis erreichbar. Arbeitet der Motor aber auf kein viskoses Medium oder nur mit einem geringen Lastanteil auf ein viskoses Medium, so fällt der Motor schon bei einem viel kleineren Lastmoment als dem der natürlichen Grenzleistung entsprechenden theoretischen Grenzmoment außer Tritt und kippt ab. Die hier noch erreichbare Grenzleistung wird im folgenden als "dynamische Grenzleistung" bezeichnet ($P_{ab,dyn}$ (Punkt 2, Fig. 1). Dies ist für den Fachmann sehr enttäuschend, weil er erkennen muß, daß der Motor viel weniger Leistung abgibt als er nach der Berechnung erwartet hätte. Aufgabe der Erfindung ist es, einen Einphasensynchronmotor der eingangs erwähnten Art so zu dimensionieren und zu betreiben, daß er auch bei nicht oder nur teilweise viskoser Belastung möglichst nahe an die natürliche Grenzleistung, die größer ist als die dynamische Grenzleistung, herankommt, und derart stabilisiert ist, daß er nicht außer Tritt fällt oder abkippt, wobei der Motor zwar thermisch voll ausgelastet, thermisch aber nicht überlastet sein darf.

Die gestellte Aufgabe ist je nach den übrigen Randbedingungen auf verschiedene Weise lösbar.

Eine der Lösungsmöglichkeiten ist erfindungsgemäß dadurch gekennzeichnet, daß zur Vergrößerung der abgebbaren dynamischen Grenzleistung bei nicht oder nur teilweise viskoser Last der zur Verfügung stehende Kupferwickelraum durch Bewickeln mit Kupferdraht nur teilweise ausgenutzt wird und die Erregerwicklung so ausgelegt wird, daß die Verlustleistung in der Erregerwicklung gerade den zulässigen Wert annimmt, bei dem die zulässige Wicklungstemperatur nicht überschritten wird (Fig. 1, Punkt 3), wobei die vergrößerte Grenzleistung kleiner als die natürliche Grenzleistung ist, aber so gewählt werden muß, daß sie für die vorliegende Antriebsaufgabe ausreicht.

Das nur teilweise Vollwickeln des zur Verfügung stehenden Wickelraumes kann beispielsweise dadurch erreicht werden, daß der Drahtdurchmesser verringert wird. Dabei ist aber darauf zu achten, daß die Verlustleistung nicht zu groß wird. Trotz verkleinerter Wickelfläche wird die abgebbare Leistung des Motors überraschenderweise aber größer und liegt dann in Fig. 1 höher als die dynamische Grenzleistung (Punkt 3).

Voraussetzung für diese Leistung ist, daß die verbleibende Kippleistung für eine vorliegende Antriebsaufgabe ausreicht und sich der Konstrukteur mit der Leistungsabsenkung zufrieden gibt.

Es gibt jedoch Anwendungsfälle, beispielsweise bei kleinen Haushaltsgeräten, bei denen eine derart unvollständige Ausnutzung des Wickelraumes eine zu geringe Nutzleistung nach sich zieht. Der Konstrukteur wird dann erkennen, daß mit den bekannten Lösungsschemen der gewünschte Motor und auch das gewünschte Gerät nicht realisierbar ist. Bei der Konstruktion miniaturisierter Geräte und Motoren ist besonderer Wert darauf gelegt, daß die an der Motorwelle abnehmbare Leistung so groß wie möglich ist, weil der zur Verfügung stehende Raum aufgrund der Miniaturisierung der zur Verfügung stellbaren Leistung ohnehin Grenzen setzt.

Unter diesen Bedingungen läßt sich die Aufgabenstellung der Erfindung derart konkretisieren, daß der Einphasensynchronmotor der eingangs erwähnten Art so zu dimensionieren ist, daß unter Berücksichtigung der notwendigen Betriebsstabilisierung bei einer bestimmten Verlustleistung, die sich in einer Wärmeentwicklung äußert, die abgegebene Leistung in der gestellten Antriebsaufgabe bei stabilen Betriebsbedingungen maximal wird.

Diese konkretisierte Aufgabenstellung läßt sich erfindungsgemäß bei einem Motor der eingangs erwähnten Art dadurch lösen, daß zur Vergrößerung der abgebbaren dynamischen Grenzleistung bei nicht oder nur teilweise viskoser Last der zur Verfügung stehende Wickelraum durch Bewickeln mit Kupferdraht voll ausgenutzt ist und zur den Wickelraum füllenden Erregerwicklung außerhalb des Motors ein ständig eingeschaltet bleibender ohmscher Widerstand $R_v$ in Reihe geschaltet ist, dessen Auslegung in Abhängigkeit von dem viskosen Anteil der Last so gewählt ist, daß ddie abgebbare Leistung auf den bei dem vorliegenden viskosen Lastanteil maximal möglichen Wert gebracht wird (Fig. 1 und 2, Punkt 4).

Ein derart optimierter Einphasensynchronmotor hat eine deutlich erhöhte dynamische Grenzleistung, die in Fig. 1 und 2 durch den Punkt 4 wiedergegeben ist. Fig. 2 zeigt ein Diagramm bei dem die abgegebene Leistung $P_{ab}$ über dem Vorwiderstand $R_v$ aufgetragen ist. Dieses Diagramm erfüllt immer die Bedingung $F_{cu} = F_{cu,max}$ nach Fig. 1. Die Größe von $R_v$ wird zweckmäßigerweise in Abhängigkeit von der viskosen Belastung der Verlustleistung entsprechend dem in Fig. 2 gegebenen Zusammenhang optimiert (Kurve a).

Der ohmsche Widerstand hat den weiteren Vorteil, daß er Verlustleistung aufnimmt und sich erwärmt. Die im Motor anfallende Verlustleistung wird dadurch verkleinert, und der Motor selbst wird weniger heiß. In einer besonderen Ausführungsform wird die durch volles Bewickeln des Wickelraumes gebildete Erregerwicklung so ausgelegt, daß die Verlustleistung in der Wicklung gerade den zulässigen Wert erreicht, bei dem die zulässige Wicklungstemperatur nicht überschritten wird (Fig. 1 und 2, Punkt 5). Der Leistungsgewinn ist damit beträchtlich (Fig. 2, Kurve b).

Es ergibt sich mithin die überraschende Tatsache, daß durch das Vorschalten eines ständig eingeschaltet bleibenden ohmschen Widerstandes die im Einsatzfall praktisch an der Welle abgegebene Nutzleistung des Motors beim Einsatz des ohmschen Widerstandes nicht, wie erwartet und aus der DE-U 17 93 381 bekannt, kleiner, sondern im Gegenteil größer wird. Die an der Welle abgebbare Nutzleistung nähert sich dabei trotz eines Betriebes mit nicht oder nicht voll viskoser Belastung dem Betriesverhalten eines Motors an, der auf eine viskose Belastung arbeitet.

In Fig. 3 ist eine schematische Betriebsschaltung für den Einphasensynchronmotor mit Vorwiderstand dargestellt. In Reihe mit dem Einphasensynchronmotor M ist ein Vorwiderstand $R_v$ geschaltet. Der Vorwiderstand $R_v$ hat einen Festwert und ist ständig eingeschaltet. Da der Vorwiderstand $R_v$ Verlustleistung aufnimmt, erwärmt er sich auch. Deshalb ist es von Vorteil, wenn dieser Vorwidestand räumlich getrennt von dem Motor angeordnet ist und vorzugsweise bewußt belüftet ist.

Eine entsprechend der engeren Aufgabe der Erfindung angestrebte Optimierung der Motorauslegung läßt sich in weiterer Ausgestaltung der Erfindung erfindungsgemäß auch dadurch erreichen, daß zur Vergrößerung der abgebbaren dynamischen Grenzleistung bei nicht oder nur teilweise viskoser Last zur den Wickelraum füllenden Erregerwicklung außerhalb des Motors ein ständig eingeschaltet bleibender Kondensator $C_v$ in Reihe geschaltet ist, dessen Auslegung in Abhängigkeit von dem viskosen Anteil der Last so gewählt ist, daß er in Abstimmung mit der Auslegung der Erregerwicklung derart, daß diese nicht zu heiß wird, die abgebbare Leistung auf den bei dem vorliegenden viskosen Lastanteil maximal möglichen Wert bringt.

Die Vorschaltung eines Kondensators zur Erhöhung der dynamischen Grenzleistung bei nicht oder nur teilweise viskoser Last hat den Vorteil, daß an dem Kondensator im Idealfall keine Verlustleistung anfällt und der Gesamtwirkungsgrad damit größer ist als beim Einsetzen eines ohmschen Vorwiderstandes. Durch das Einsetzen eines dauernd vorgeschalteten Kondensators läßt sich in Fig. 1 und 2 auch etwa der Punkt 5 erreichen.

In Fig. 4 ist ein Prinzipschaltbild der Kondensatorvorschaltung dargestellt. In Reihe mit dem Einphasensynchronmotor M liegt dabei der Kondensator $C_v$.

Es ist auch möglich, zur Erhöhung der dynamischen Grenzleistung eine Kombination aus ohmschem Widerstand $R_v$ und Kondensator $C_v$ einzusetzen. Eine Realisierung dieser Kombination ist im Anspruch 5 beschrieben. Fig. 5 zeigt, wie mit dem Motor M ein ohmscher Vorwiderstand $R_v$ und ein Kondensator $C_v$ in Reihe geschaltet sind.

Es ist aus der DE-U 17 93 391 auch bekannt, einen ohmschen Widerstand ständig vorzuschalten, um den Motor an eine höhere Betriebsspannung anzulegen, wobei aber bewußt auch ein Leistungsverlust von der definierten natürlichen Grenzleistung in Kauf genommen wird und damit ein Teil der zugeführten Energie bewußt vernichtet wird.

Bei einem weiteren bekannten Motor (DE-AS 14 38 569) ist zwar ein Betriebskondensator C vorgesehen, der dauernd eingeschaltet bleibt. Dieser Betriebskondensator dient jedoch zur Optimierung der natürlichen Grenzleistung $P_{ab,n}$, so daß die induzierte Spannung E und die angelegte Spannung U sowie die Spulengüte $\omega L/R$ optimal aneinander angepaßt sind. Aus der DE-AS ist nicht bekannt, daß die natürliche Grenzleistung bei nicht oder nur teilweise viskoser Belastung nicht erreicht werden kann. Hierzu ist ein weiterer Kondensator erforderlich, der dort in den Fig. 4 und 5 mit $C_v$ bezeichnet ist.

Im Gegensatz dazu wird bei dem Einphasensynchronmotor nach der Erfindung durch das Dauervorschalten von Bauelementen eine Leistungserhöhung erzielt.

Aus der DE-U 17 93 381 ist es auch bekannt, parallel zu einem Kondensator einen hochohmigen Entladewiderstand zu schalten, der ständig eingeschaltet bleibt. Ohne den parallelgeschalteten Kondensator kann der Motor aber überhaupt nicht laufen.

Das Vorschalten eines Vorwiderstandes oder eines Kondensators nach der Erfindung bezieht sich auf Motoren und Anwendungen, bei denen die dynamische Grenzleistung kleiner ist als die natürliche Grenzleistung. Hierdurch läßt sich bei diesen Motor-Last-Kombinationen erreichen, daß der Motor bei voll gewickelten Erregerwicklungen und maxiamal zulässiger Motortemperatur die größtmögliche Leistung abgibt, die größer ist als die dynamische Grenzleistung und fast an die natürliche Grenzleistung heranreicht.

**Patentansprüche**

1. Verfahren zur Dimensionierung eines Antriebes mit einem selbstanlaufenden Einphasensynchronmotor ohne Hilfswicklung mit einem dauermagnetischen, diametral magnetisierten Läufer und mit einem Ständer, der mit Erregerwicklung versehen ist und einen für diesen Motor durch seine Abmessungen vorgegebenen maximalen Kupferwickelraum aufweist, mit einer zugehörigen, bei viskoser Last theoretischen, natürlichen Grenzleistung ($P_{ab,n}$), die zu erzielen ist, wenn bei völliger Ausnutzung der Wickelfläche unter Variation der Wicklungsdaten unter Beachtung der thermischen Vorschriften der Motor nicht zu heiß wird, wobei der Motor bei nicht viskoser oder teilweise viskoser Last eine dynamische Grenzleistung oder Kippleistung hat, die niedriger als die natürliche Grenzleistung ist, dadurch gekennzeichnet, daß zur Vergrößerung der abgebbaren dynamischen Grenzleistung bei nicht oder nur teilweise viskoser Last der zur Verfügung stehende Kupferwickelraum durch Bewickeln mit Kupferdraht nur teilweise ausgenutzt wird und die Erregerwicklung so ausgelegt wird, daß die Verlustleistung in der Erregerwicklung gerade den zulässigen Wert annimmt, bei dem die zulässige Wicklungstemperatur nicht überschritten wird (Fig. 1, Punkt 3), wobei die vergrößerte Grenzleistung kleiner als die natürliche Grenzleistung ist, aber so gewählt werden muß, daß sie für die vorliegende Antriebsaufgabe ausreicht.

2. Verfahren zur Dimensionierung eines Antriebes mit einem selbstanlaufenden Einphasensynchronmotor ohne Hilfswicklung mit einem dauermagnetischen, diametral magnetisierten Läufer und mit einem Ständer, der mit Erregerwicklung versehen ist und einen für diesen Motor durch seine Abmessungen vorgegebenen maximalen Kupferwickelraum aufweist, mit einer zugehörigen, bei viskoser Last theoretischen, natürlichen Grenzleistung ($P_{ab,n}$), die zu erzielen ist, wenn bei völliger Ausnutzung der Wickelfläche unter Variation der Wicklungsdaten unter Beachtung der thermischen Vorschriften der Motor nicht zu heiß wird, wobei der Motor bei nicht viskoser oder teilweise viskoser Last eine dynamische Grenzleistung oder Kippleistung hat, die niedriger als die natürliche Grenzleistung ist, dadurch gekennzeichnet, daß zur Vergrößerung der abgebbaren dynamischen Grenzleistung bei nicht oder nur teilweise viskoser Last der zur Verfügung stehende Wickelraum durch Bewickeln mit Kupferdraht voll ausgenutzt ist und zur den Wickelraum füllenden Erregerwicklung außerhalb des Motors ein ständig eingeschaltet bleibender ohmscher Widerstand ($R_v$) in Reihe geschaltet ist, dessen Auslegung in Abhängigkeit von dem viskosen Anteil der Last so gewählt ist, daß die abgebbbare Leistung auf den bei dem vorliegenden viskosen Lastanteil maximal möglichen Wert gebracht wird. (Fig. 1 und 2, Punkt 4).

3. Verfahren zur Dimensionierung eines Antriebes mit einem selbstanlaufenden Einphasensynchronmotor ohne Hilfswicklung nach Anspruch 2, dadurch gekennzeichnet, daß die durch volles Bewickeln des Wickelraumes gebildete Erregerwicklung so ausgelegt wird, daß die Verlustleistung in der Wicklung gerade den zulässigen Wert erreicht, bei dem die zulässige Wicklungstemperatur nicht überschritten wird (Fig. 1 und 2, Punkt 5).

4. Verfahren zur Dimensionierung eines Antriebes mit einem selbstanlaufenden Einphasensynchronmotor ohne Hilfswicklung mit einem dauermagnetischen, diametral magnetisierten Läufer und mit einem Ständer, der mit Erregerwick-10 lung versehen ist und einen für diesen Motor durch seine Abmessungen vorgegebenen maximalen Kupferwickelraum aufweist, mit einer zugehörigen, bei viskoser Last theoretischen, natürlichen Grenzleistung ($P_{ab,n}$), die zu erzielen ist, wenn bei völliger Ausnutzung der Wickelfläche unter Variation der Wicklungsdaten unter Beachtung der thermischen Vorschriften der Motor nicht zu heiß wird, wobei der Motor bei nicht viskoser oder teilweise viskoser Last eine dynamische Grenzleistung oder Kippleistung hat, die niedriger als die natürliche Grenzleistung ist, dadurch gekennzeichnet, daß zur Vergrößerung der abgebbaren dynamischen Grenzleistung bei nicht oder nur teilweise viskoser Last zur den Wickelraum füllenden Erregerwicklung außerhalb des Motors ein ständig eingeschaltet bleibender Kondensator ($C_v$) in Reihe geschaltet ist, dessen Auslegung in Abhängigkeit von dem viskosen Anteil der Last so gewählt ist, daß er in Abstimmung mit der Auslegung der Erregerwicklung derart, daß diese nicht zu heiß wird, die abgebbare Leistung auf den bei dem vorliegenden viskosen Lastanteil maximal möglichen Wert bringt.

5. Verfahren zur Dimensionierung eines Antriebes mit einem selbstanlaufenden Einphasensynchronmotor ohne Hilfswicklung mit einem dauermagnetischen, diametral magnetisierten Läufer und mit einem Ständer, der mit Erregerwicklung versehen ist und einen für diesen Motor durch seine Abmessungen vorgegebenen maximalen Kupferwickelraum aufweist, mit einer zugehörigen, bei viskoser Last theoretischen, natürlichen Grenzleistung ($P_{ab,n}$),

die zu erzielen ist, wenn bei völliger Ausnutzung der Wickelfläche unter Variation der Wicklungsdaten unter Beachtung der thermischen Vorschriften der Motor nicht zu heiß wird, wobei der Motor bei nicht viskoser oder teilweise viskoser Last eine dynamische Grenzleistung oder Kippleistung hat, die niedriger als die natürliche Grenzleistung ist, dadurch gekennzeichnet, daß zur Vergrößerung der abgebbaren dynamischen Grenzleistung bei nicht oder nur teilweise viskoser Last zur den Wickelraum füllenden Erregerwicklung außerhalb des Motors eine ständig eingeschaltet bleibende Reihenschaltung aus ohmschem Widerstand und Kondensator in Reihe geschaltet ist, deren Auslegung in Abhängigkeit von dem viskosen Anteil der Last so gewählt ist, daß sie in Abstimmung mit der Auslegung der Erregerwicklung derart, daß diese nicht zu heiß wird, die abgebbare Leistung auf den bei dem vorliegenden viskosen Lastanteil maximal möglichen Wert bringt.

**Claims**

1. A method of dimensioning a drive including a self-starting single-phase synchronous motor without auxiliary coil, which motor comprises a diametrically magnetized permanent-magnetic rotor and a stator provided with exciter coils and having a copper volume which is maximal for this motor and is dictated by its dimensions, which motor has a corresponding theoretical inherent maximum power ($P_{ab,n}$) in the case of viscous load, which power is attainable if the motor is not overheated, observing thermal regulations, when the winding area is utilized completely and the winding data are varied, the dynamic maximum power or stalling power in the case of a non-viscous or partly viscous load being lower than the inherent maximum power of the motor, characterized in that in order to increase the dynamic maximum output power in the case of a non-viscous or partly viscous load the available copper volume is occupied only partly by turns of copper wire and the exciter coil is so designed that the power dissipation in the exciter coil just assumes the permissible value at which the permissible coil temperature is not exceeded (Fig. 1, point 3), the increased maximum power being smaller than the inherent maximum power but being selected so as to be adequate for the specified driving requirements.

2. A method of dimensioning a drive including a self-starting single-phase synchronous motor without auxiliary coil, which motor comprises a diametrically magnetized permanent-magnetic rotor and a stator provided with exciter coils and having a copper volume which is maximal for this motor and is dictated by its dimensions, which motor has a corresponding theoretical inherent maximum power ($P_{ab,n}$) in the case of viscous load, which power is attainable if the motor is not overheated, observing thermal regulations, when the winding area is utilized completely and the winding data are varied, the dynamic maximum power or stalling power in the case of a non-viscous or partly viscous load being lower than the inherent maximum power of the motor, characterized in that in order to increase the dynamic maximum output power in the case of a non-viscous or partly viscous load the available copper volume is occupied fully by turns of copper wire and, outside the motor, a resistor ($R_v$) is connected permanently in series with the exciter coil which occupies the winding volume, which resistor is so dimensioned depending on the viscous component of the load that the maximum output power reached the maximum possible value for the said viscous load component (Figs. 1 and 2, point 4).

3. A method of dimensioning a drive including a self-starting single-phase synchronous motor without auxiliary coil as claimed in Claim 2, characterized in that the exciter coil formed by completely filling the winding volume is so designed that the power dissipation in the coil just reaches the permissible value at which the permissible coil temperature is not exceeded (Fig. 1 and 2, point 5).

4. A method of dimensioning a drive including a self-starting single-phase synchronous motor without auxiliary coil, which motor comprises a diametrically magnetized permanent-magnetic rotor and a stator provided with exciter coils and having a copper volume which is maximal for this motor and is dictated by its dimensions, which motor has a corresponding theoretical inherent maximum power ($P_{ab,n}$) in the case of viscous load, which power is attainable if the motor is not overheated, observing thermal regulations, when the winding area is utilized completely and the winding data are varied, the dynamic maximum power or stalling power in the case of a non-viscous or partly viscous load being lower than the inherent maximum power of the motor, characterized in that in order to increase the dynamic maximum output power in the case of a non-viscous or partly viscous load a capacitor ($C_v$), outside the motor, is connected permanently in series with the exciter coil which fills the winding volume, which capacitor is so dimensioned depending on the viscous component of the load that, in conjunction with the exciter coil being designed not to become overheated, the output power reaches the maximum possible value for the said viscous load component.

5. A method of dimensioning a drive including a self-starting single-phase synchronous motor without auxiliary coil, which motor comprises a diametrically magnetized permanent-magnetic rotor and a stator provided with exciter coils and having a copper volume which is maximal for this motor and is dictated by its dimensions, which motor has a corresponding theoretical inherent maximum power ($P_{ab,n}$) in the case of viscous load, which power is attainable if the motor is not overheated, observing thermal regulations, when the winding area is utilized completely and the winding data are varied, the dynamic maximum power or stalling power in the case of a non-viscous or partly viscous load being lower than the inherent maximum power of the motor, characterized in that in order to increase the dynamic maximum output power in the case of a non-viscous or partly viscous load a series arrangement of a resistor and a capacitor is connected permanently in series with the exciter coil which fills the winding volume, which series arrangement is so dimensioned depending on the viscous component of the load that, in conjunction with the exciter coil being designed not to become overheated, the output power reaches the maximum possible value for the said viscous load component.

## Revendications

1. Procédé pour dimensionner un entraînement comportant un moteur synchrone monophasé à auto-démarrage sans enroulement auxiliaire, muni d'un rotor à aimantation permanente diamétrale et d'un stator muni d'un enroulement d'excitation et présentant un volume de cuivre maximal prédéterminé par ses dimensions, moteur qui, dans le cas d'une charge visqueuse, peut fournir une puissance limite naturelle théorique ($P_{ab,n}$) qui peut être atteinte si, lors de l'utilisation complète de la surface d'enroulement, le moteur ne devient pas trop chaud, si l'on change les données d'enroulement tout en observant les prescriptions thermiques, alors que, en présence d'une charge non visqueuse ou partiellement visqueuse, le moteur a une puissance limite dynamique ou puissance de renversement inférieure à la puissance limite naturelle, caractérisé en ce que, pour augmenter la puissance limite dynamique débitée en présence d'une charge non visqueuse ou partiellement visqueuse, le volume de cuivre disponible n'est occupé que partiellement de spires de fil de cuivre et en ce que l'enroulement d'excitation est conçu de façon que la puissance dissipée dans l'enroulement d'excitation prenne tout juste la valeur admissible à laquelle la température d'enroulement admissible n'est pas dépassée ( figure 1, point 3), alors que la puissance limite augmentée est inférieure à la puissance limite naturelle mais doit être choisie de façon qu'elle soit suffisante pour l'application envisagée.

2. Procédé pour dimensionner un entraînement comportant un moteur synchrone monophasé à auto-démarrage sans enroulement auxiliaire, muni d'un rotor à aimantation permanente diamétrale et d'un stator muni d'un enroulement d'excitation et présentant un volume de cuivre maximal prédéterminé par ses dimensions, moteur qui, dans le cas d'une charge visqueuse, peut fournir une puissance limite naturelle théorique ($P_{ab,n}$) qui peut être atteinte si, lors de l'utilisation complète de la surface d'enroulement, le moteur ne devient pas trop chaud si l'on change les données d'enroulement tout en observant les prescriptions thermiques, alors que, en présence d'une charge non visqueuse ou partiellement visqueuse, le moteur a une puissance limite dynamique ou puissance de renversement inférieure à la puissance limite naturelle, caractérisé, en ce que, pour augmenter la puissance limite dynamique débitée en présence d'une charge non visqueuse ou partiellement visqueuse, le volume de cuivre disponible est entièrement occupé par un enroulement de fil de cuivre et en ce qu'une résistance ($R_v$) située en dehors du moteur est connectée de façon permanente en série avec l'enroulement d'excitation occupant la totalité du volume de cuivre disponible, résistance dont le dimensionnement a été choisi en fonction de la part visqueuse de la charge, de telle manière que la puissance débitée soit portée à la valeur maximale qui est possible en présence de ladite part visqueuse de la charge (figures 1 et 2, point 4).

3. Procédé pour dimensionner un entraînement comportant un moteur synchrone monophasé à auto-démarrage sans enroulement auxiliaire selon la revendication 2, caractérisé en ce que l'enroulement d'excitation occupant tout le volume de cuivre disponible est conçu de façon que la puissance dissipée dans l'enroulement atteigne juste la valeur admissible à laquelle la température admissible de l'enroulement n'est pas dépassée (figures 1 et 2, point 5).

4. Procédé pour dimensionner un entraînement comportant un moteur synchrone monophasé à auto-démarrage sans enroulement auxiliaire, muni d'un rotor à aimantation permanente diamétrale et d'un stator muni d'un enroulement d'excitation et présentant un volume de cuivre maximal prédéterminé par ses dimensions, moteur qui, dans le cas d'une charge visqueuse, peut fournir une puissance limite naturelle théorique ($P_{ab,n}$) qui peut être atteinte si, lors de l'utilisation complète de la surface d'enroulement, le moteur ne devient pas trop chaud, si l'on change les données d'enroulement tout en observant les prescriptions thermiques, alors que, en présence d'une charge non visqueuse ou partiellement visqueuse, le moteur a une puissance limite dynamique ou puissance de renversement inférieure à la puissance limite naturelle, caractérisé en ce que, pour augmenter la puissance limite dynamique débitée en présence d'une charge non visqueuse ou partiellement visqueuse, un condensateur ($C_v$) disposé en dehors du moteur est connecté de façon permanente en série avec l'enroulement d'excitation occupant la totalité du volume de cuivre disponible, condensateur dont le dimensionnement a été choisi en fonction de la part visqueuse de la charge, de telle manière que, adapté au dimensionnement de l'enroulement d'excitation de façon à éviter un trop grand échauffement de ce dernier, il porte la puissance nominale à la valeur maximale qui est possible en présence de ladite part visqueuse de la charge.

5. Procédé pour dimensionner un entraînement comportant un moteur synchrone monophasé à auto-démarrage sans enroulement auxiliaire, muni d'un rotor à aimantation permanente diamétrale et d'un stator muni d'un enroulement d'excitation et présentant un volume de cuivre maximal prédéterminé par ses dimensions, moteur qui, dans le cas d'une charge visqueuse, peut fournir une puissance limite naturelle théorique ($P_{ab,n}$) qui peut être atteinte si, lors de l'utilisation complète de la surface d'enroulement, le moteur ne devient pas trop chaud si l'on change les données d'enroulement tout en observant les prescriptions thermiques, alors que, en présence d'une charge non visqueuse ou partiellement visqueuse, le moteur a une puissance limite dynamique ou puissance de renversement inférieure à la puissance limite naturelle, caractérisé en ce que, pour augmenter la puissance limite dynamique débitée en présence d'une charge non viqueuse ou partiellement visqueuse, un montage série d'une résistance et d'un condensateur, disposé en dehors du moteur, est connecté de façon permanente en série avec l'enroulement d'excitation occupant la totalité du volume de cuivre disponible, montage série, dont le dimensionnement a été choisi en fonction de la part visqueuse de la charge, de telle manière que, adapté au dimensionnement de l'enroulement d'excitation de façon à éviter un trop grand échauffement de ce dernier, il porte la puissance nominale à la valeur maximale qui est possible en présence de ladite part visqueuse de la charge.

FIG.1

FIG.2

FIG.3

FIG.4

FIG.5